# EUROPÄISCHE PATENTSCHRIFT

(11) **EP 4 179 605 B1**
(45) Veröffentlichungstag und Bekanntmachung des Hinweises auf die Patenterteilung: **18.09.2024**
(21) Anmeldenummer: 21746389.2
(22) Anmeldetag: 12.07.2021
(51) Int. Cl.: H02J 7/00, H01M 50/51, H01M 10/48

(54) **AKKUMULATOR-ENTLADEVORRICHTUNG ZUM ENTLADEN VON AKKUMULATOREN UND VERFAHREN ZUM ENTLADEN EINER MEHRZAHL AN AKKUMULATOREN**
RECHARGEABLE BATTERY DISCHARGE DEVICE FOR DISCHARGING RECHARGEABLE BATTERIES, AND METHOD FOR DISCHARGING A PLURALITY OF RECHARGEABLE BATTERIES
DISPOSITIF DE DÉCHARGE DE BATTERIE RECHARGEABLE POUR DÉCHARGER DES BATTERIES RECHARGEABLES, ET PROCÉDÉ POUR DÉCHARGER UNE PLURALITÉ DE BATTERIES RECHARGEABLES

(30) Priorität: 13.07.2020 DE 102020118418
(43) Veröffentlichungstag der Anmeldung: 17.05.2023
(73) Patentinhaber: Duesenfeld GmbH, 38176 Wendeburg (DE)
(72) Erfinder: AHRENS, Jonathan, 38118 Braunschweig (DE)
(74) Vertreter: Gramm, Lins & Partner Patent- und Rechtsanwälte PartGmbB
(86) Internationale Anmeldenummer: PCT/EP2021/069373
(87) Internationale Veröffentlichungsnummer: WO 2022/013170

(56) Entgegenhaltungen:
- DE-A1- 102016 224 002
- JP-A- 2019 071 701
- JP-A- H08 289 479
- US-A1- 2015 303 527
- US-A1- 2017 054 306

## Beschreibung

Die Erfindung betrifft eine Akkumulator-Entladevorrichtung gemäß dem Oberbegriff von Anspruch 1. Gemäß einem zweiten Aspekt betrifft die Erfindung ein Verfahren zum Entladen einer Mehrzahl an Akkumulatoren

Akkumulatoren, bei denen es sich gemäß einer bevorzugten Ausführungsform um Lithium-Akkumulatoren handelt, werden vor dem Recycling oft entladen. Das hat den Vorteil, dass chemische Reaktionen beim Recycling vermindert oder unterdrückt werden. Beim Entladen sollte sichergestellt sein, dass dies nicht zu einer Zerstörung des Akkumulators führt.

Akkumulatoren werden in der Regel in Batteriemodulen verbaut. Ein derartiges Batteriemodul umfasst in der Regel eine Vielzahl an galvanischen Zellen, die untereinander zu Untereinheiten zusammenfasst sein können. Ein Batteriemodul, beispielsweise für ein Elektrofahrzeug, weist in der Regel eine große Vielzahl an galvanischen Zellen auf. Diese können unterschiedliche Ladezustände und unterschiedliche Verschleißzustände aufweisen. Um ein katastrophales Versagen einer oder mehrerer galvanischer Zellen des Akkumulators zu verhindern, ist es überaus vorteilhaft, wenn ein Tiefentladen des Akkumulators vermieden wird.

Beim Betrieb eines Batteriemoduls werden diese in der Regel von einem sogenannten Batteriemanagementsystem so ge- und entladen, dass es nicht zu einem Tiefentladen kommen kann. Derartige Systeme sind aus der US 2015/0303527 A1, der JP H08-289479A und der US 2017/0054306 A1 bekannt. Ist ein Batteriemodul jedoch defekt, kann in aller Regel nicht mehr auf das Batteriemanagementsystem zugegriffen werden. Es ist zudem meist unklar, in welchem Ladungszustand die einzelnen Akkumulatoren sind. Um sie recyceln zu können, werden die Akkumulatoren daher einzeln entladen.

Es ist bekannt, die Akkumulatoren dazu einzeln an eine Last anzuschließen, sodass der Energieinhalt, der noch im Akkumulator enthalten ist, über die Last abgeführt wird. Das hat den Nachteil, dass eine Vielzahl an Lasten, bei denen es sich beispielsweise um ohmsche Widerstände handeln kann, bereitgehalten werden muss.

Um das zu vermeiden, können mehrere Akkumulatoren parallel geschaltet werden. Das führt zu hohen elektrischen Strömen, um die Zeit, die für die Entladung notwendig ist, nicht zu lang werden zu lassen. Voraussetzung für ein derartiges Vorgehen ist, dass sich die Ladezustände voneinander nicht zu stark voneinander unterscheiden, beispielsweise dürfen sich die Ladezustände untereinander um höchstens 10 % unterscheiden.

Es ist auch bekannt, die Akkumulatoren in Reihe zu schalten und gemeinsam zu entladen. Das allerdings ist nur möglich, wenn sich die Ladezustände der einzelnen Ackumulatoren kaum voneinander unterscheiden, insbesondere um weniger als 1%. Das ist aber in der Praxis nur aufwändig sicherzustellen, da dazu die Ladezustände ermittelt werden müssen.

Um diese genannten Probleme zu umgehen, ist zudem vorgeschlagen worden, den Elektrolyten vor dem weiteren Recycling zu entfernen, um ein Durchgehen zu verhindern.

Auch ist bekannt, die Akkumulatoren mit flüssigem Stickstoff einzufrieren und in diesem Zustand zu zerkleinern, da in gefrorenem Zustand keine chemische Reaktion möglich ist. Diese Verfahren sind vergleichsweise energieaufwändig.

Aus der JP 2019-071701 A ist ein Entladungsbehandlungsverfahren von Altbatterien bekannt, das eine Entladungsbehandlung einer Vielzahl von Abfalleinheitszellen durchführt. Dabei wird ein Hauptschaltungswiderstand zwischen eine Anode eines Endes und eine Kathode des anderen Endes der Vielzahl von in Reihe geschalteten Abfalleinheitszellen geschaltet, und Hilfsschaltungswiderstände und Hilfsschalter werden jeweils in Reihe zwischen die Anode und die Kathode jeder der Vielzahl von Abfalleinheitszellen geschaltet. Das Verfahren umfasst einen Normalzeit-Entladeschritt und einen Entladeschritt während einer Polaritätsumkehrung von Ackumulatoren, bei dem Zellen, die sich nicht in einem Polaritätsumkehrungszustand befinden, kontinuierlich entladen werden. Dazu werden Hilfsschalter, die mit den Abfalleinheitszellen in dem Polaritätsumkehrungszustand verbunden sind, geschlossen. So wird ein Durchgehen der Zellen verhindert, da diese nicht in den Polaritätsumkehrungszustand kommen.

Die DE 10 2014 207 239 A1 beschreibt ein Verfahren zur Entsorgung eines Energiespeichers mit mehreren elektrochemischen Zellen, das ein Balancing-Steuergerät des Energiespeichers zum gezielten Tiefentladen des Energiespeichers nutzt. Der Tiefentladevorgang wird extern angestoßen. Die in den galvanischen Zellen gespeicherte Energie wird über den Innenwiderstand der Zellen in Wärme umgewandelt.

Die DE 10 2013108 023 A1 befasst sich mit einem System zur Erhöhung der Sicherheit von Akkumulatoren, die in Elektroautos verbaut sind. Kommt es zu einem Unfall, werden die Batteriezellen unter Verwendung einer Zellenausgleichsschaltung gezielt entladen. Der Energieinhalt der Batterien wird dabei in Wärme umgewandelt.

Die DE 10 2016 206 919 A1 befasst sich damit, Zellen-Ladungszustände auszubalancieren. Dazu werden Zellenpaare untereinander über eine externe Balancierschaltung zum Erzeugen eines externen Ausgleichsstroms zwischen den Zellenpaaren verbunden.

Aus der DE 10 2016 224 002 A1 ist bekannt, ein Batteriemodul dadurch zu entladen, dass Batteriezellen des zu entladenden Batteriemoduls nacheinander mit einer Entladeeinrichtung mittels einer Zellenschalteinheit ausgehend von einer vorgegebenen Batteriezelle selektiv elektrisch gekoppelt werden, um die Batteriezellen zum Entladen des Batteriemoduls einzeln nacheinander elektrisch zu entladen.

Der Erfindung liegt die Aufgabe zugrunde, das Entladen von Akkumulatoren, insbesondere im Rahmen eines Entsorgungsverfahrens, zu verbessern.

Die Erfindung löst das Problem durch eine Akkumulator-Entladevorrichtung mit den Merkmalen von Anspruch 1.

Gemäß einem zweiten Aspekt löst die Erfindung das Problem durch ein Verfahren zum Entladen einer Mehrzahl an Akkumulatoren mit den Merkmalen von Anspruch 12.

Vorteilhaft an der Erfindung ist, dass die Akkumulatoren automatisch entladen werden können. Es kann lediglich notwendig sein, die Akkumulatoren manuell an jeweils einen Akku-Anschluss anzuschließen.

Vorteilhaft ist zudem, dass nur wenig Lasten bereitgestellt werden müssen. Zwar ist es möglich, mehrere Lasten zu verwenden, das ist aber entbehrlich. Insbesondere ist es möglich, die Energie, die noch in den Akkumulatoren gespeichert ist, als Nutzenergie weiterzuverwenden. Es ist in anderen Worten möglich, nicht aber notwendig, dass die in den Akkumulatoren enthaltene elektrische Energie als Wärme abgeführt wird. Insbesondere kann sie als elektrische Energie einem Verbraucher zugeführt werden.

Günstig ist, dass das Entladen der Akkumulatoren in der Regel sehr sicher erfolgen kann, da sichergestellt ist, dass die vorgegebene Minimal-Spannung nicht unterschritten wird. Die Minimal-Spannung wird vorzugsweise so gewählt, dass ein Durchgehen des Akkumulators vermieden wird. Beispielsweise beträgt die Minimal-Spannung null Volt.

Günstig ist auch, dass mittels der Akkumulator-Ladevorrichtung Akkumulatoren beliebiger Ladezustände und/oder Restspannungen entladen werden können. In der Regel ist daher beim Bediener der Akkumulator-Entladevorrichtung keine Kenntnis über den zu entladenden Akkumulator notwendig. Die Wahrscheinlichkeit von Fehlbedienung ist zudem in der Regel klein.

Im Rahmen der vorliegenden Beschreibung wird unter einem Akkumulator ein Bauteil verstanden, das elektrische Energie elektrochemisch speichert. Ein Akkumulator umfasst zumindest ein galvanisches Element, vorzugsweise eine Vielzahl an galvanischen Elementen. In anderen Worten kann es sich bei dem Akkumulator um eine Batterie handeln, also um eine Kombination, insbesondere eine Reihenschaltung, aus mehreren galvanischen Zellen. Es ist zudem möglich, dass der Akkumulator zwei oder mehr voneinander unabhängige Batterien enthält.

Bei den Akkumulatoren handelt es sich vorzugsweise zumindest mehrheitlich, insbesondere ausschließlich, um Lithium-Akkumulatoren. Unter einem Lithium-Akkumulator wird insbesondere ein Akkumulator verstanden, bei dem die elektrochemische Reaktion auf Lithium beruht. Vorzugsweise ist der Lithium-Akkumulator ein Lithium-Ionen-Akkumulator. Es muss sich aber nicht um einen Lithium-Akkumulator handeln, die Erfindung ist auch für Akkumulatoren anderer Bauarten einsetzbar. Es ist zudem möglich, nicht aber notwendig, dass alle Akkumulatoren die gleiche Bauart haben. Insbesondere ist es auch möglich, dass Akkumulatoren unterschiedlicher Bauarten angeschlossen werden.

Unter einem Kurzschlussschalter wird insbesondere eine Vorrichtung verstanden, mittels der ein Stromfluss durch den entsprechenden Akkumulator unterbunden werden kann. Insbesondere ist der Kurzschlussschalter ausgebildet zum Überbrücken des jeweiligen Akku-Anschlusses. So können mit dem ersten Kurzschlussschalter die Pole des ersten Akku-Anschlusses miteinander kurzgeschaltet werden, wenn die Minimal-Spannung null Volt beträgt. Jeder Akku-Anschluss hat zumindest zwei Pole, die auch als Anschlusskontakte bezeichnet werden können.

Beispielsweise handelt es sich bei den Kurzschlussschaltern um Relais. Es sind aber auch alle anderen potentialfrei schaltenden Schalter oder mit Potential schaltende Schalter, insbesondere auch Halbleiterschalter, als Kurzschlussschalter einsetzbar.

Unter der Reihenschaltung wird insbesondere eine solche Schaltung verstanden, bei der sich die Spannungen von zumindest zwei Akkumulatoren, insbesondere einer Mehrzahl der elektrisch miteinander in eine Schaltung geschalteten Akkumulatoren, addieren. Es ist möglich, nicht aber notwendig und in der Regel nicht sinnvoll, dass zwei oder mehr Akkumulatoren parallel geschaltet sind.

Gemäß einer bevorzugten Ausführungsform besitzt die Akkumulator-Entladevorrichtung eine Anzeige zum Anzeigen derjenigen Akkumulatoren, deren jeweilige Akku-Spannungen die Minimal-Spannung nicht überschreiten und/oder derjenigen Akku-Anschlüsse, deren Anschlusskontakte überbrückt sind. Das hat den Vorteil, dass ein Bediener der Akkumulator-Entladevorrichtung feststellen kann, welche Akkumulatoren entfernt werden können. Es sei darauf hingewiesen, dass eine Anzeige, die diejenigen Akkumulatoren anzeigt, deren jeweilige Akku-Spannung die Minimal-Spannung nicht überschreitet, auch dadurch realisiert sein kann, dass diejenigen Akkumulatoren angezeigt werden, deren jeweilige Akku-Spannung die Minimal-Spannung unterschreitet und/oder, die diejenigen Akku-Anschlüsse anzeigt, deren Anschlusskontakte nicht überbrückt sind. Aus der Abwesenheit eines solchen Signals kann darauf geschlossen werden, dass für den entsprechenden Akkumulator die Akku-Spannung die Minimal-Spannung nicht überschreitet und/oder dass die entsprechenden Anschlusskontakte überbrückt sind.

Unter einer Anzeige wird insbesondere eine Vorrichtung verstanden, anhand derer von einem Bediener die Information gewonnen werden kann, für welche Akku-Anschlüsse die Minimal-Spannung unterschritten wird bzw. die Anschlusskontakte welcher Akku-Anschlüsse kurzgeschlossen sind. Es ist möglich, dass diese Anzeige eine optische Anzeige ist, die ein optisches Signal abgibt. Es ist aber auch möglich, dass die Anzeige eine elektrische, haptische Anzeige oder eine sonstige Anzeige ist. Insbesondere ist es auch möglich, dass die Anzeige lediglich ein elektrisches Signal abgibt, sodass beispielsweise ein Roboter, der gemäß einer bevorzugten Ausführungsform Teil der Akkumulator-Entladevorrichtung ist, automatisch den entsprechenden Akkumulator, dessen Minimal-Spannung unterschritten ist, von seinem Acku-Anschluss trennt. Der Roboter kann insbesondere auch ausgebildet sein zum automatischen Platzieren von entladenen Akkumulatoren an einer vorgegebenen Stelle. Bei dieser Stelle kann es sich beispielsweise um einen anderen Behälter oder eine Fördervorrichtung handeln, die die entladenen Akkumulatoren zur weiteren Verarbeitung befördert.

Günstig ist es, wenn die Akkumulator-Entladevorrichtung eine Verpolungsschutzschaltung aufweist. Diese Verpolungsschutzschaltung ist insbesondere ausgebildet zum automatischen Erfassen eines polfalsch angeschlossenen Akkumulators. Günstig ist es, wenn die Verpolungsschutzschaltung ausgebildet ist zum Ausgeben einer Verpolungs-Warnmeldung und/oder zum polerichtigen Anschließen des polfalsch angeschlossenen Akkumulators.

Beispielsweise kann die Verpolungsschutzschaltung eine Umpolschaltung aufweisen. Die Umpolschaltung ist ausgebildet zum automatischen Umpolen der Spannung, die an den Anschlusskontakten des jeweiligen Akku-Anschlusses anliegt. Dadurch ist der ursprünglich polfalsch angeschlossene Akkumulator nun polrichtig angeschlossen. Es ist in diesem Fall unbeachtlich, wenn der Akkumulator polfalsch an die Anschlusskontakte des jeweiligen Akku-Anschlusses angeschlossen wird, da die Umpolschaltung dafür sorgt, dass der Akkumulator polrichtig in die Reihenschaltung geschaltet wird.

Unter einer Verpolungs-Warnmeldung wird insbesondere eine Meldung verstanden, die kodiert, an welchem Akku-Anschluss ein Akkumulator falsch gerpolt angeschlossen ist. Die Verpolungs-Warnmeldung kann vom Menschen wahrnehmbar oder nicht wahrnehmbar sein. Es kann sich insbesondere um eine optische, akustische oder elektrische Verpolungs-Warnmeldung handeln.

Alternativ oder zusätzlich ist die Verpolungsschutzschaltung so ausgebildet, dass sie einen polfalsch angeschlossenen Akkumulator nicht in die Reihenschaltung schaltet.

Gemäß einer bevorzugten Ausführungsform ist die Steuereinheit ausgebildet zum automatischen Durchführen eines Verfahrens mit den Schritten (i) Bestimmen von zeitlichen Akkuspannungsänderungen von Akku-Spannungen und (ii) Herausschalten des entsprechenden Akkumulators aus der Reihenschaltung mittels des entsprechenden Kurzschlussschalters und/oder Ausgeben einer Spannungsabriss-Warnmeldung, wenn die zeitliche Akkuspannungsänderung außerhalb eines vorgegebenen Toleranzintervalls liegt. Eine zu starke zeitliche Akkuspannungsänderung deutet darauf hin, dass der entsprechende Akkumulator eine Fehlfunktion aufweist. Um zu verhindern, dass ein elektrischer Stromfluss durch den Akkumulator zu einem Schaden an dem Akkumulator führt oder einen existierenden Schaden verschlimmert, wird vorzugsweise der entsprechende Akkumulator überbrückt, das heißt, dass kein Strom mehr durch den Akku-Anschluss in den Akkumulator fließt.

Günstig ist es, wenn die Steuereinheit ausgebildet ist zum erneuten Kontaktieren dieses Akkumulators, also Schalten des Akkumulators in die Reihenschaltung. Kommt es erneut zu einer zeitlichen Akkuspannungsänderung, die außerhalb des vorgegebenen Toleranzintervalls liegt, kann dann erneut der entsprechende Akkumulator überbrückt und/oder eine Spannungsabriss-Warnmeldung ausgegeben werden. Unter dem erneuten Kontaktieren wird insbesondere verstanden, dass der entsprechende Akkumulator erneut in eine Reihenschaltung mit zumindest einem anderen Akkumulator geschaltet wird. Das erfolgt mittels des entsprechenden Kurzschlussschalters. Unter dem Dekontaktieren wird insbesondere ein Entfernen aus der Reihenschaltung verstanden.

Vorzugsweise ist die Steuereinheit ausgebildet zum automatischen Durchführen eines Verfahrens mit dem Schritt eines Zuschaltens eines Teils der Akkumulatoren in die Reihenschaltung, sodass eine Summe der Akku-Spannung innerhalb eines vorgegebenen Zielspannungs-Intervalls liegt. Wenn zwei oder mehr Kombinationen an Akku-Spannungen innerhalb des Zielspannungs-Intervalls liegen, wird vorzugsweise die Kombination mit der größeren Anzahl an Akku-Spannungen gewählt. Vorzugsweise werden alle Akkumulatoren, deren Akku-Spannungen oberhalb der Minimal-Spannung liegen, in Reihe geschaltet, wenn die Summe aller Akku-Spannungen kleiner ist als eine untere Intervallgrenze des Zielspannungs-Intervalls. Auf diese Weise liegt in der Regel am Last-Anschluss eine Spannung innerhalb des Zielspannungs-Intervalls an. Eine derartige Spannung kann besonders einfach weiterverarbeitet werden.

Die Akkumulatoren, die zugeschaltet werden, sind insbesondere vor dem Zuschalten bereits an die Akkumulator-Entladevorrichtung angeschlossen, aber nicht in die Reihenschaltung geschaltet. In anderen Worten geben diese Akkumulatoren keine elektrische Energie ab. Je größer die Zahl der Anschlüsse der Akkumulator-Entladevorrichtung, desto seltener müssen neue zu entladene Akkumulatoren an die Akkumulator-Entladevorrichtung angeschlossen werden. Das erleichtert die Bedienung.

Vorzugsweise ist die obere Intervallgrenze des Zielspannungs-Intervalls höchstens 60 Volt. In diesem Fall kann in der Regel auf besondere Schutzmaßnahmen wie Schutzkleidung verzichtet werden.

Vorzugsweise ist die Zahl der Akku-Anschlüsse größer als fünf, insbesondere größer als 10. Günstig ist es oft, wenn die Zahl der Akku-Anschlüsse kleiner ist als 150, insbesondere kleiner als 30.

Die Akkumulator-Entladevorrichtung besitzt eine Last zum Abführen der elektrischen Leistung beim Entladen der Akkumulatoren. Beispielsweise handelt es sich bei der Last um einen Wechselrichter zum Erzeugen einer Wechselspannung einer vorgegebenen Frequenz und Spannung aus der Gleichspannung, die am Lastanschluss anliegt. Alternativ kann es bei sich bei der Last beispielsweise um einen Gleichspannungswandler zum Erzeugen einer Gleichspannung einer vorgegebenen Spannung aus der Gleichspannung, die am Lastanschluss anliegt, handeln. Der Wechselrichter kann beispielsweise ein Schaltnetzteil sein.

Unter dem Merkmal, dass die Last, insbesondere der Wechselrichter, an den Last-Anschluss angeschlossen ist, wird insbesondere verstanden, dass der Wechselrichter mit dem Last-Anschluss elektrisch verbunden ist. Es ist möglich, nicht aber notwendig, dass der Last-Anschluss eine spezielle Vorrichtung ist, beispielsweise eine Steckdose. Insbesondere kann der Last-Anschluss durch zwei oder mehr elektrische Leiter gebildet sein, mittels denen die Last angeschlossen werden kann.

Günstig ist es, wenn der Wechselrichter mit einem öffentlichen Netz zum Rückspeisen von elektrischer Energie in das öffentliche Stromnetz verbunden ist.

Vorzugsweise ist der Wechselrichter mit einem Stromnetz - das das öffentliche Stromnetz sein kann, nicht aber sein muss - verbunden, an das elektrische Verbraucher angeschlossen sind. Beispielsweise ist zumindest ein Verbraucher Teil einer Lithiumbatterie-Recyclinganlage zum Wiederverwerten von Lithiumbatterien. Insbesondere kann zumindest ein elektrischer Verbraucher eine Zerkleinerungsanlage zum Zerkleinern von Lithiumbatterie, eine Pumpe, beispielsweise eine Vakuumpumpe, oder ein Motor sein.

Gemäß einer bevorzugten Ausführungsform ist die Steuereinheit ausgebildet zum automatischen Durchführen eines Verfahrens mit den Schritten (i) Erfassen einer Soll-Leistungsabgabe der Akkumulator-Entladevorrichtung und (ii) Reduzieren einer Entladeleistung der Akkumulatoren, wenn eine Ist-Leistungsabgabe die Soll-Leistungsabgabe überschreitet. Die Soll-Leistungsabgabe kann beispielsweise von einem Eingabegerät oder aus einem Speicher ausgelesen werden oder von einem Leistungsmesser erfasst werden.

Besonders günstig ist es, wenn das Erfassen der Soll-Leistungsabgabe ein Erfassen eines momentanen Leistungsbedarfs der elektrischen Verbraucher des Stromnetzes ist. Technische Anlagen, beispielsweise eine Lithiumbatterie-Recyclinganlage, benötigen schwankende Mengen an elektrischer Leistung. Wenn die Ist-Leistungsabgabe der Akkumulator-Entladevorrichtung, also die momentan abgegebene elektrische Leistung, größer ist als der momentane Leistungsbedarf der elektrischen Verbraucher des Stromnetzes, wird in aller Regel elektrische Leistung in das öffentliche Netz zurück gespeist. Die Vergütung für so zurückgespeiste elektrische Energie ist vergleichsweise klein. Es kann daher vorteilhaft sein, die Leistungsabgabe der Akkumulator-Entladevorrichtung zu drosseln, wenn diese den momentanen Leistungsbedarf der elektrischen Verbraucher des Stromnetzes überschreitet.

Gemäß einer bevorzugten Ausführungsform besitzt die Akkumulator-Entladevorrichtung einen elektrischen Pufferspeicher. Der Pufferspeicher ist vorzugsweise so verschaltet, dass elektrische Energie, die von der Akkumulator-Entladevorrichtung aus den Akkumulatoren entnommen wird, zumindest teilweise und/oder zumindest zeitweise im Pufferspeicher gespeichert wird.

Günstig ist es, wenn der Pufferspeicher eine Speicherkapazität von zumindest 10 kWh, bzw. zumindest 30 kWh, insbesondere zumindest 50 kWh, hat. In der Regel ist die Speicherkapazität des Pufferspeichers kleiner als 10 MWh.

Vorzugsweise ist die Steuereinheit ausgebildet zum automatischen Durchführen eines Verfahrens mit den Schritten: (i) Erfassen der Soll-Leistungsabgabe der Akkumulator- Entladevorrichtung und (ii) Aufladen des Pufferspeichers, sodass die Ist-Leistungsabgabe die Soll-Leistungsabgabe nicht überschreitet. In anderen Worten ist die Steuereinheit ausgebildet zum Einspeichern von elektrischer Energie in den Pufferspeicher, die nicht von den Verbrauchern des Stromnetzes benötigt wird.

Günstig ist es, wenn die Akkumulator-Entladevorrichtung zumindest einen Akku besitzt, der an den ersten Akku-Anschluss angeschlossen ist. Insbesondere weist die Akkumulator-Entladevorrichtung eine Mehrzahl an Akkumulatoren auf, die an jeweils einen Akku-Anschluss angeschlossen sind.

Vorzugsweise besitzt die Akkumulator-Entladevorrichtung zumindest einen Wärmesensor, insbesondere eine Wärmebildkamera, die angeordnet ist zum Erfassen einer Temperatur zumindest eines der Akkumulatoren. Wenn sich ein Akkumulator zu stark erhitzt, kann dies zu einem Durchgehen, also katastrophalen Versagen des Akkumulators aufgrund einer sich selbst verstärkenden Entladung führen. Um einen solchen Fall zu vermeiden, wird gemäß einer bevorzugten Ausführungsform die Temperatur der Akkumulatoren kontinuierlich erfasst. Überschreitet eine Temperatur eine Warn-Temperatur, entfernt die Steuereinheit den entsprechenden Akkumulator automatisch aus der Reihenschaltung. Alternativ oder zusätzlich entfernt die Steuereinheit den entsprechenden Akkumulator automatisch aus der Reihenschaltung, wenn eine Temperaturänderungsgeschwindigkeit T, also die - numerisch berechnete - Ableitung der Temperatur Ti nach der Zeit t eine vorgegebene Warn-Temperaturänderungsgeschwindigkeit Ṫ_{warn} überschreitet.

Vorzugsweise ist die Steuereinheit ausgebildet zum automatischen Durchführen eines Verfahrens mit den folgenden Schritten: (a) Erfassen eines Akkumulators, der an einem Akku-Anschluss angeschlossen ist und der die Minimal-Spannung Uₘᵢₙ nicht überschreitet und (b) Schließen oder Geschlossen-Halten eines ersten Schaltelements, insbesondere eines Kurzschluss-Relais, des Kurzschlussschalters des Akku-Anschlusses.

Das Verfahren umfasst den Schritt Schließen oder Geschlossen-Halten eines zweiten Schaltelements, insbesondere eines Zuschalt-Relais, des Kurzschlussschalters des Akku-Anschlusses.

Alternativ oder zusätzlich umfasst das Verfahren vorzugsweise den Schritt (d) Ausgeben eines Signals, das kodiert dass der Akkumulator entfernt werden kann.

Günstig ist es, wenn die Steuereinheit ausgebildet ist zum automatischen Durchführen eines Verfahrens mit den folgenden Schritten, die vorzugsweise nach in den drei vorherigen Absätzen genannten Schritten durchgeführt werden: (a) Erfassen, dass kein Akkumulator am Akku-Anschluss angeschlossen ist, (b) Öffnen oder Geöffnet-Halten des zweiten Schaltelements und gegebenenfalls (c) Öffnen oder Geöffnet-Halten des ersten Schaltelements. Dadurch wird die Ausbildung eines Lichtbogens im ersten Schaltelement vermindert oder verhindert. Das Verfahren umfasst vorzugsweise zudem die Schritte (c) Schließen oder Geschlossen-Halten des Zuschalt-Relais. Die Schritte (b) und (c) erfolgen vorzugsweise innerhalb von höchstens 1 Sekunde, insbesondere höchstens 0,1 Sekunde.

Das Erfassen, dass kein Akkumulator am Akku-Anschluss angeschlossen ist, erfolgt beispielsweise mittels des jeweiligen Spannungsmessers oder durch Einlesen einer Benutzereingabe von einem Bedienelement wie beispielsweise einem Schalter oder einer Schaltfläche.

Das Erfassen, dass kein Akkumulator am Akku-Anschluss angeschlossen ist, erfolgt beispielsweise dadurch, dass - insbesondere wenn der Spannungsmesser keine am Akku-Anschluss anliegende Spannung misst - ein Spannungsimpuls, vorzugsweise von höchstens 60 Volt, am Akku-Anschluss angelegt wird. Resultiert kein elektrischer Strom, ist kein Akkumulator angeschlossen.

Die zweiten Schaltelemente sind so verschaltet, dass für jedes Schaltelement gilt, dass unabhängig vom Schaltzustand des ersten Schaltelements der am entsprechende Akku-Anschluss angeschlossene Akkumulator nur dann entladen werden kann, wenn das zweite Schaltelement geschlossen ist.

Ein erfindungsgemäßes Verfahren umfasst vorzugsweise die Schritte, die oben im Rahmen der bevorzugten Ausbildung der Steuereinheit beschrieben sind.

Im Folgenden wird die Erfindung anhand der beigefügten Zeichnung näher erläutert. Dabei zeigt
- Figur 1: ein Schaltbild einer erfindungsgemäßen Akkumulator-Entladevorrichtung,
- Figur 2: ein Schaltbild einer erfindungsgemäßen Akkumulator-Entladevorrichtung gemäß einer zweiten Ausführungsform und
- Figur 3: eine alternative Ausführungsform einer erfindungsgemäßen Akkumulator-Entladevorrichtung.

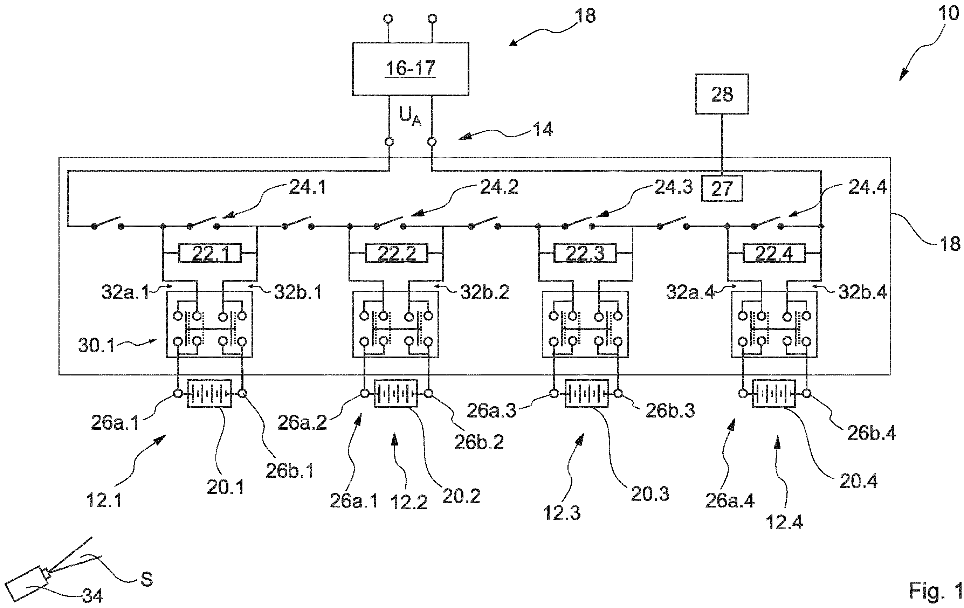

Figur 1 zeigt eine erfindungsgemäße Akkumulator-Entladevorrichtung 10 mit Akku-Anschlüssen 12.i (i = 1, 2, ..., N; hier: N = 4). Die Akkumulator-Entladevorrichtung 10 besitzt zudem einen Last-Anschluss 14, an den im vorliegenden Fall eine Last 16 in Form eines Wechselrichters 17 angeschlossen ist. Der Wechselrichter 17 hat einen Spannungsanschluss 18, an dem eine Wechselspannung U_{AC} anliegt, die eine vorgegebene Frequenz f hat, beispielsweise 50 Hertz oder 60 Hertz. Die Wechselspannung U_{AC} beträgt beispielsweise 230 Volt oder 110 Volt. Aber auch andere Spannungen sind möglich.

Die Entladeschaltung 18 besitzt für jeden Akku-Anschluss 12.i einen Spannungsmesser 22. i zum Messen einer Akku-Spannung U_{20.i} des jeweils angeschlossenen Akkumulators 20.i. Die Entladeschaltung 18 hat zudem für jeden Akku-Anschluss 12 einen Kurzschlussschalter 24.i. Mittels eines jeden Kurzschlussschalter 24.i kann der jeweilige Akku-Anschluss 12.i kurzgeschlossen werden. In anderen Worten werden jeweilige Anschlusskontakte 26a.i, 26b.i des Akku-Anschlusses 12.i auf das gleiche Potential geschaltet. Auf diese Weise fließt kein Strom mehr durch den entsprechenden Akkumulator 20.i.

Die Akkumulator-Entladevorrichtung 10 besitzt eine Steuereinheit 27, die mit allen Spannungsmessern 22.i verbunden ist, sodass die Steuereinheit 27 alle Akku-Spannungen U_{20.i} erfasst. Die Steuereinheit 27 ist zudem mit allen Kurzschlussschaltern 24.i zum Ansteuern verbunden. In anderen Worten kann die Steuereinheit 27 jeden Kurzschlussschalter 24.i automatisch schließen und öffnen.

Die Akkumulator-Entladevorrichtung 10 kann eine Anzeige 28 besitzen, die mit der Steuereinheit 27 mittels eines Leiters oder per Funk verbunden ist und ausgebildet ist zum Anzeigen derjenigen Akku-Anschlüsse 12.i, an denen eine Akkuspannung 20.i anliegt, die kleiner ist als eine vorgegebene Minimal-Spannung Uₘᵢₙ oder solcher Akku-Anschlüsse 12. i, bei denen der jeweilige Kurzschlussschalter 24.i geschlossen ist. Ein Bediener der Akkumulator-Entladevorrichtung 10 kann dann den entsprechenden Akkumulator 12.i entnehmen, da er entladen ist. Beispielswiese beträgt die Minimal-Spannung Uₘᵢₙ = 0 Volt.

Es ist ebenfalls möglich, nicht aber notwendig, dass die Akkumulator-Entladevorrichtung 10 für zumindest einen Akku-Anschluss, insbesondere jeweils alle Akku-Anschlüsse 12.i, eine Verpolungsschutzschaltung 30.i aufweist. Misst der Spannungsmesser 22.i eine falsche Polung des angeschlossenen Akkumulators, ist der Akkumulator also polfalsch angeschlossen, so steuert die Steuereinheit 27 die Verpolungsschutzschaltung 30.i so an, dass diese die Polarität umkehrt, sodass wieder die richtige Polung an den Umpolungsschaltungs-Anschlüssen 32a.1, 32b.1 anliegt.

Die Steuereinheit 27 ist so eingerichtet, dass sie automatisch kontinuierlich die Akku-Spannungen U_{20.i} erfasst. Liegt eine Akku-Spannung U_{20.i} oberhalb der Minimal-Spannung Uₘᵢₙ, so hält die Steuereinheit 27 den jeweiligen Kurzschlussschalter 24.i geöffnet. Sind alle Akku-Spannungen 20.i größer als die Minimal-Spannung Uₘᵢₙ, so sind alle Kurzschlussschalter 24.i geschlossen und alle Akkumulatoren 20.i sind in einer Reihenschaltung miteinander verbunden. Die Akku-Spannungen U_{2o.i} addieren sich damit zu einer Ausgangsspannung U_{A}, die am Last-Anschluss 14 anliegt und im lastfreien Fall der Summe aller Akku-Spannungen U_{20.i} entspricht.

Fällt für einen Akkumulator 20.i die Akku-Spannung U_{20.i} unter die Minimal-Spannung Uₘᵢₙ, so schließt die Steuereinheit 27 den jeweiligen Kurzschlussschalter 24.i, sodass der entsprechende Akkumulator 20.i überbrückt ist. Es fließt dann kein Strom mehr durch den entsprechenden Akkumulator 20.i. Wenn die Minimal-Spannung Uₘᵢₙ nicht zu null Volt gewählt wird, besitzt die Entladeschaltung 18 für jeden Akku-Anschluss 12.i einen weiteren Schalter, der einen der beiden Anschlusskontakte 26a.i oder 26b.i vom Rest der Schaltung trennt.

Um zu erreichen, dass die Ausgangsspannung U_{A} stets in einem vorgegebenen Vielspannungs-Intervall Z liegt, kann die Steuereinheit 27 so ausgebildet sein, dass sie nur einen Teil der Akkumulatoren 20.i in Reihe schaltet und die anderen Akkumulatoren überbrückt, sodass die entsprechende Ausgangsspannung U_{A} erreicht wird.

Die Anzeige 28 kann zum Ausgeben von Warnmeldungen verwendet werden, beispielsweise einer Verpolungs-Warnmeldung oder einer Spannungsabriss-Warnmeldung, wenn von der Steuereinheit 27 eine zu starke Akkuspannungsänderung *U̇* ermittelt wird. Die Akkuspannungsänderung *U̇* wird von der Steuereinheit 27 durch numerisches Ableiten der jeweiligen Akku-Spannung U_{20.3} berechnet.

Mittels eines Wärmesensors 34, im vorliegenden Fall in Form einer Wärmebildkamera 34, in deren Sichtfeld S die Akkumulatoren 20.i liegen, werden deren jeweilige Temperaturen Ti überwacht. Der Wärmesensor 34 ist mit der Steuereinheit 27 verbunden. Übersteigt eine der Temperaturen Ti eine vorgegebene Warn-Temperatur T_{warn}, so dekontaktiert die Steuereinheit 27 den entsprechenden Akkumulator 20.i. Gemäß einer bevorzugten Ausführungsform schaltet die Steuereinheit 27 den entsprechenden Akkumulator 20.i nach einer vorgegebenen Wartezeit wieder in die Reihenschaltung. Alternativ zur Wärmebildkamera kann der Wärmesensor beispielsweise auch Thermoelemente aufweisen.

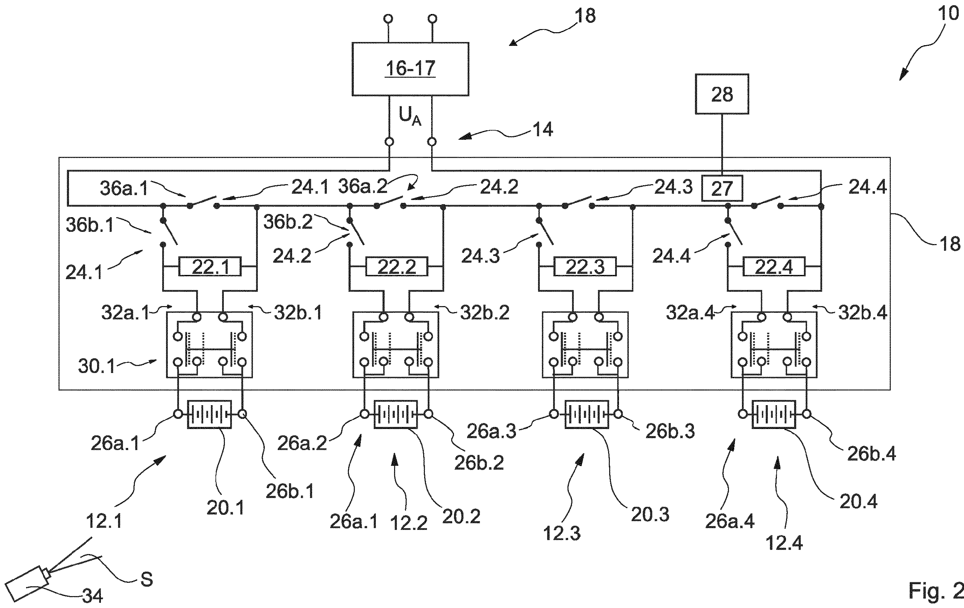

Figur 2 zeigt ein Schaltbild einer erfindungsgemäßen Akkumulator-Entladevorrichtung 10 gemäß einer zweiten Ausführungsform. Die Kurzschlussschalter 24.i weisen in dieser Ausführungsform ein erstes Schaltelement 36a.i und ein zweites Schaltelement 36b.i auf. Die Schaltelemente 36a.i, 36b.i sind beispielsweise Relais. Auf diese Weise kann ein Akkumulator 20.i dekontaktiert werden, wenn seine Akku-Spannung U_{20.i} unterhalb der Uₘᵢₙ Minimal-Spannung liegt, wobei für die Minimal-Spannung Uₘᵢₙ ≠ 0 V gilt.

Die Schaltelemente 36a.i können auch als Kurzschluss-Relais bezeichnet werden. Die Schaltelemente 36b.i können auch als Zuschalt-Relais bezeichnet werden.

In der Steuereinheit 27 ist ein Zielspannungs-Intervall Z gespeichert. Die Steuereinheit 27 schaltet automatisch so viele Akkumulatoren 20.i in Serie, dass die resultierende Summenspannung im Zielspannungs-Intervall Z liegt. Das Zuschalten eines Akkumulators 20.i erfolgt dadurch, dass das entsprechende Kurzschluss-Relais 36a.i geöffnet wird und das Zuschalt-Relais 36b.i geschlossen wird. Dadurch gibt der Ackumulator elektrische Energie ab. Das erfolgt vorzugsweise, nicht aber notwendigerweise, automatisch, beispielsweise mittels der Steuereinheit 27.

Das Herausschalten eines Akkumulators 20.i erfolgt dadurch, dass (a) das entsprechende Kurzschluss-Relais 36a.i geschlossen wird oder bleibt und (b) das Zuschalt-Relais 36b.i geschlossen wird oder bleibt. Nach dem Entfernen eines Akkumulators von seinem Akku-Anschluss 12.i wird das Zuschalt-Relais 36b.i geöffnet. Danach wird ein weiterer Akkumulator 20`.i an den Akku-Anschluss 12.i angeschlossen. Danach wird, sofern notwendig, das entsprechende Kurzschluss-Relais 36a.i geöffnet und das Zuschalt-Relais 36b.i geschlossen. Auch das erfolgt vorzugsweise, nicht aber notwendigerweise, automatisch, beispielsweise mittels der Steuereinheit 27. Der neue Akkumulator 20'.i ist dann angeschlossen.

Die N Zahl der Akku-Anschlüsse ist vorzugsweise so gewählt, dass nicht alle Akkumulatoren in Serie geschaltet werden müssen, damit die Summenspannung im Zielspannungs-Intervall Z liegt. Vorzugsweise ist die Zahl N so gewählt, dass höchstens die Hälfte, insbesondere höchstens ein Drittel der Akku-Anschlüsse kontaktiert sein muss, damit die die Summenspannung im Zielspannungs-Intervall Z liegt.

Hat ein Akkumulator die Minimal-Spannung Uₘᵢₙ erreicht oder unterschritten, wird er, wie oben beschrieben, überbrückt. Es ist dann günstig, nicht aber notwendig, dass die Steuereinheit 27 ein Signal ausgibt, dass der entsprechende Akkumulator entfernt werden kann.

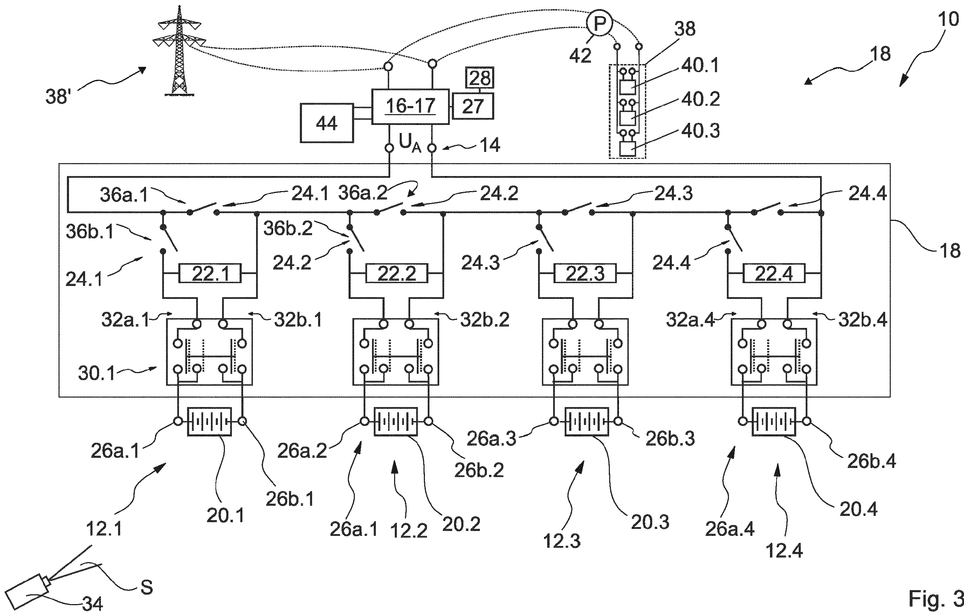

Figur 3 zeigt eine alternative Ausführungsform einer erfindungsgemäßen Akkumulator-Entladevorrichtung 10, deren Wechselrichter 17 mit einem öffentlichen Stromnetz 38` zum Rückspeisen von elektrischer Energie verbunden ist.

Alternativ oder zusätzlich ist der Wechselrichter 17 mit einem Stromnetz 38 verbunden, an das elektrische Verbraucher 40.j (j = 1, 2, ... J) angeschlossen sind. Mittels eines Leistungsmessers 42 kann die elektrische Leistung P₄₀ der elektrischen Verbraucher 40.j zeitabhängig gemessen werden.

Die Steuereinheit 27 ist ausgebildet zum automatischen Erfassen der elektrischen Leistung P₄₀, die eine Soll-Leistungsabgabe Pₛₒₗₗ der Akkumulator-Entladevorrichtung 10 darstellt. Unterschreitet eine Ist-Leistungsabgabe Pᵢₛₜ, also die tatsächliche Leistungsabgabe, der Akkumulator-Datenvorrichtung 10 die Soll-Leistungsabgabe Pₛₒₗₗ, wird aus dem öffentlichen Stromnetz 38` Leistung entnommen. Überschreitet hingegen die Ist-Leistungsabgabe Pᵢₛₜ die Soll-Leistungsabgabe Pₛₒₗₗ, wird elektrische Leistung öffentliche Netz 38` eingespeist. Um das zu verhindern, kann die Steuereinheit ausgebildet sein, die Ist-Leistungsabgabe Pᵢₛₜ dadurch zu senken, dass beispielsweise einer oder mehrere Akkumulatoren aus der Schaltung herausgeschaltet werden.

Alternativ oder zusätzlich kann die Akkumulator-Entladevorrichtung 10 einen elektrischen Pufferspeicher 44 aufweisen. Der Pufferspeicher 44 kann beispielsweise ein Akkumulator sein. Der Pufferspeicher 44 ist so verschaltet, dass elektrische Energie, die von der Akkumulator-Entladevorrichtung 10 aus den Akkumulatoren 20 entnommen wird, zumindest teilweise und/oder zumindest zeitweise im Pufferspeicher gespeichert werden kann.

Beispielsweise ist die Steuereinheit 27 so ausgebildet, dass sie dann elektrische Leistung in den Pufferspeicher 44 einleitet, wenn die Soll-Leistungsabgabe Pₛₒₗₗ kleiner ist als die Ist-Leistungsabgabe Pᵢₛₜ. Beispielweise wird so viel elektrische Leistung in den Pufferspeicher 40 eingeleitet, dass die in das öffentliche Stromnetz 38` eingeleitete elektrische Energie minimiert wird.

### Bezugszeichenliste

| | | | |
|---|---|---|---|
| 10 | Akkumulator-Entladevorrichtung | Pₛₒₗₗ | Soll-Leistungsabgabe |
| 12 | Akku-Anschluss | Pᵢₛₜ | Ist-Leistungsabgabe |
| 14 | Last-Anschluss | S | Sichtfeld |
| 16 | Last | Ti | Temperatur des i-ten Akkumulators |
| 17 | Wechselrichter | | |
| 18 | Entladeschaltung | T_{warn} | Warn-Temperatur |
| 20 | Akkumulator | U_{AC} | Wechselspannung |
| 22 | Spannungsmesser | U_{20.i} | Akku-Spannung |
| 24 | Kurzschlussschalter | Uₘᵢₙ | Minimal-Spannung |
| 26 | Anschlusskontakte | U_{A} | Ausgangs-Spannung |
| 27 | Steuereinheit | U̇ | Akkuspannungsänderung |
| 28 | Anzeige | Z | Zielspannungs-Intervall |
| 30 | Verpolungsschutzschaltung | | |
| 32 | Verpolungsschaltungsanschluss | | |
| 34 | Wärmebildkamera | | |
| 36a | erstes Schaltelement, Kurzschluss-Relais | | |
| 36b | zweites Schaltelement, Zuschalt-Relais | | |
| 38 | Stromnetz | | |
| 38` | öffentliches Stromnetz | | |
| 40 | Verbraucher | | |
| 42 | Leistungsmesser | | |
| 44 | Pufferspeicher | | |
| f | Frequenz | | |
| i | Laufindex der Akkuanschlüsse | | |
| j | Laufindex der Verbraucher | | |
| N | Zahl der Akku-Anschlüsse | | |

## Patentansprüche

1. Akkumulator-Entladevorrichtung (10) zum Entladen von Akkumulatoren (20) im Rahmen eines Entsorgungsverfahrens, mit
(a) einem ersten Akku-Anschluss (12.1) zum Anschließen eines ersten Akkumulators (20.1),
(b) einem zweiten Akku-Anschluss (12.2) zum Anschließen eines zweiten Ackumulators (20.2),
(c) zumindest einem dritten Akku-Anschluss (12.3) zum Anschließen eines dritten Akkumulators (20.3) und
(d) einem Last-Anschluss (14) für eine Last (16) zum Abführen einer elektrischen Leistung beim Entladen der Akkumulatoren (20),
(e) eine Entladeschaltung (18), die
(i) einen ersten Spannungsmesser (22.1), der angeordnet ist zum Messen einer ersten Akku-Spannung (U_{20.1}), die über dem ersten Akku-Anschluss (12.1) abfällt,
(ii) einen zweiten Spannungsmesser (22.2), der angeordnet ist zum Messen einer zweiten Akku-Spannung (U_{2o.2}), die über dem zweiten Akku-Anschluss (12.2) abfällt,
(iii) einen dritten Spannungsmesser (22.3), der angeordnet ist zum Messen einer dritten Akku-Spannung (U_{20.3}), die über dem dritten Akku-Anschluss (12.3) abfällt, und
(iv) eine Steuereinheit (27) aufweist,
(f) wobei die Steuereinheit (27) ausgebildet ist zum automatischen Durchführen eines Verfahrens mit den Schritten:
(i) für alle Spannungsmesser (22.i) Erfassen der jeweiligen Akku-Spannung (U_{20.i)},
(ii) wenn die jeweilige Akku-Spannung (U_{20.i}) eine vorgegebene Minimal-Spannung (Uₘᵢₙ) überschreitet, Schalten oder Geschaltet-Halten des entsprechenden Akkumulators (20.i) in eine Reihenschaltung mit zumindest einem anderen Akkumulator und
(iii) wenn die jeweilige Akku-Spannung (U_{20.i}) die Minimal-Spannung (Uₘᵢₙ) nicht überschreitet, Entfernen des entsprechenden Akkumulators (20.i) aus der Reihenschaltung,
(g) wobei die Minimal-Spannung (Uₘᵢₙ) so gewählt ist, dass ein Durchgehen des Akkumulators vermieden wird, und
(h) die Entladeschaltung (18)
(i) einen ersten Kurzschlussschalter (24.1) zum Kurzschließen des ersten Akku-Anschlusses (12.1),
(ii) einen zweiten Kurzschlussschalter (24.2) zum Kurzschließen des zweiten Akku-Anschlusses (12.2) und
(iii) einen dritten Kurzschlussschalter (24.3) zum Kurzschließen des dritten Akku-Anschlusses (12.3) aufweist und
(iv) ausgebildet ist zum Entfernen des entsprechenden Akkumulators (20.i) aus der Reihenschaltung mittels des entsprechenden Kurzschlussschalters (24.1, 24.2, 24.3)
(i) wobei die Kurzschlussschalter (24.1, 24.2, 24.3) jeweils ein erstes Schaltelement (36a.1, 36a.2, 36a.3) aufweisen,
**dadurch gekennzeichnet, dass**
(j) die Kurzschlussschalter (24.1, 24.2, 24.3) jeweils ein zweites Schaltelement aufweisen (36b.1, 36b.2, 36b.3), die so verschaltet sind, dass für jedes zweite Schaltelement gilt, dass unabhängig vom Schaltzustand des ersten Schaltelements der am entsprechende Akku-Anschluss angeschlossene Akkumulator nur dann entladen werden kann, wenn das zweite Schaltelement geschlossen ist.

2. Akkumulator-Entladevorrichtung (10) nach Anspruch 1, **gekennzeichnet durch** eine Last (16), die an den Last-Anschluss (14) angeschlossen ist, in Form eines Wechselrichters (17) zum Erzeugen einer Wechselspannung (U_{AC}) einer vorgegebenen Frequenz (f) und Spannung.

3. Akkumulator-Entladevorrichtung (10) nach einem der vorstehenden Ansprüche, **dadurch gekennzeichnet, dass** die Last ein Gleichspannungswandler zum Erzeugen einer Gleichspannung einer vorgegebenen Spannung aus einer Gleichspannung, die am Last-Anschluss (14) anliegt ist.

4. Akkumulator-Entladevorrichtung (10) nach einem der vorstehenden Ansprüche, **gekennzeichnet durch**
eine Anzeige (28) zum Anzeigen derjenigen Akkumulatoren (20.i), deren jeweilige Akku-Spannung (U_{20.i}) die Minimal-Spannung (Uₘᵢₙ) unterschreitet und/oder derjenigen Akku-Anschlüsse (14.i), deren Anschlusskontakte (26) kurzgeschlossen sind.

5. Akkumulator-Entladevorrichtung (10) nach einem der vorstehenden Ansprüche, **gekennzeichnet durch** eine Verpolungsschutzschaltung (30) zum automatischen
(i) Erfassen eines polfalsch angeschlossenen Akkumulators (20) und Ausgeben einer Verpolungs-Warnmeldung und/oder
(ii) polrichtigen Anschließen des polfalsch angeschlossenen Akkumulators (20).

6. Akkumulator-Entladevorrichtung (10) nach einem der vorstehenden Ansprüche, **dadurch gekennzeichnet, dass** die Steuereinheit (27) ausgebildet ist zum automatischen Durchführen eines Verfahrens mit den Schritten:
(i) Bestimmen von zeitlichen Akkuspannungsänderungen von Akku-Spannungen (U₂₀) und
(ii) Überbrücken des entsprechenden Akkumulators (20) mittels des entsprechenden Kurzschlussschalters (24) und/oder Ausgeben einer Spannungsabriss-Warnmeldung, wenn die zeitliche Akkuspannungsänderung (U) außerhalb eines vorgegebenen Toleranzintervalls liegt.

7. Akkumulator-Entladevorrichtung (10) nach einem der vorstehenden Ansprüche, **dadurch gekennzeichnet, dass** die Steuereinheit (27) ausgebildet ist zum automatischen Durchführen eines Verfahrens mit dem Schritt:
Zuschalten eines Teils der Akkumulatoren (20.i) in die Reihenschaltung, sodass eine Summe der Akku-Spannungen (U_{20.i}) innerhalb eines vorgegebenen Zielspannungs-Intervalls (Z) liegt, wobei dann, wenn zwei oder mehr Kombinationen an Akku-Spannungen (U_{20.i}) innerhalb des Zielspannungs-Intervalls (Z) liegen, die Kombination mit der größten Anzahl an Akku-Spannungen (U_{20.i}) gewählt wird.

8. Akkumulator-Entladevorrichtung (10) nach einem der vorstehenden Ansprüche, **gekennzeichnet durch**
zumindest einen Wärmesensor (34), die angeordnet ist zum Erfassen einer Temperatur (Ti) zumindest eines der Akkumulatoren (20.i).

9. Akkumulator-Entladevorrichtung (10) nach einem der vorstehenden Ansprüche, **dadurch gekennzeichnet, dass** die Steuereinheit (27) ausgebildet ist zum automatischen Durchführen eines Verfahrens mit den Schritten:
(a) Erfassen eines Akkumulators (20.i), der an einem Akku-Anschluss (12.i) angeschlossen ist und der die Minimal-Spannung (Uₘᵢₙ) nicht überschreitet,
(b) Schließen oder Geschlossen-Halten eines ersten Schaltelements (36a.i) des Kurzschlussschalters (24.i) des Akku-Anschlusses (12.i),
(c) Schließen oder Geschlossen-Halten eines zweiten Schaltelements (36b.i) des Kurzschlussschalters (24.i) des Akku-Anschlusses (12.i),
(d) Ausgeben eines Signals, das kodiert, dass der Akkumulator entfernt werden kann,
(e) Erfassen, dass kein Akkumulator (20.i) am Akku-Anschluss (12.i) angeschlossen ist,
(f) Öffnen oder Geöffnet-Halten des zweiten Schaltelements (36b.i), danach
(g) Öffnen oder Geöffnet-Halten des ersten Schaltelements (36a.i) und danach
(h) Schließen des zweiten Schaltelements (36b.i).

10. Akkumulator-Entladevorrichtung nach einem der vorstehenden Ansprüche 2 oder 4 bis 9, **dadurch gekennzeichnet, dass**
(a) der Wechselrichter (17) mit einem Stromnetz (38, 38') verbunden ist, an das elektrische Verbraucher (40.j) angeschlossen sind,
(b) die Steuereinheit (27) ausgebildet ist zum automatischen Durchführen eines Verfahrens mit den Schritten:
(i) Erfassen einer Soll-Leistungsabgabe (Pₛₒₗₗ) der Akkumulator-Entladevorrichtung (10) und
(ii) Reduzieren einer Entladeleistung der Akkumulatoren (20), wenn eine Ist-Leistungsabgabe (Pist) die Soll-Leistungsabgabe (Pₛₒₗₗ) überschreitet.

11. Akkumulator-Entladevorrichtung nach einem der vorstehenden Ansprüche, **gekennzeichnet durch**
(a) einen elektrischen Pufferspeicher (42),
(b) wobei die die Steuereinheit (27) ausgebildet ist zum automatischen Durchführen eines Verfahrens mit den Schritten:
(i) Erfassen der Soll-Leistungsabgabe (Pₛₒₗₗ) der Akkumulator-Entladevorrichtung (10) und
(ii) Aufladen des Pufferspeichers (42), sodass die Ist-Leistungsabgabe (Pist) die Soll-Leistungsabgabe (Pₛₒₗₗ) nicht überschreitet.

12. Verfahren zum Entladen einer Mehrzahl an Akkumulatoren (20) mittels einer Akkumulator-Entladevorrichtung (10), mit den automatisch durchgeführten Schritten:
(a) kontinuierlich Messen von jeweils einer Akku-Spannung (U₂₀) einer Mehrzahl an Akkumulatoren (20.i), die an jeweils einem Akku-Anschluss (12.i) der Akkumulator-Entladevorrichtung (10) angeschlossen sind,
(b) Schalten der Akkumulatoren (20), deren Akku-Spannungen (U₂₀) eine vorgegebene Minimal-Spannung (Uₘᵢₙ) nicht unterschreiten, in eine Reihenschaltung, sodass die Akkumulatoren (20.i) entladen werden, und
(c) Dekontaktieren eines Akkumulators (20.1), dessen Akku-Spannung (U_{20.1}) die vorgegebene Minimal-Spannung (Uₘᵢₙ) unterschreitet, sodass er nicht mehr in Reihe geschaltet ist,
(d) wobei die Minimal-Spannung (Uₘᵢₙ) 0 Volt beträgt und/oder das Verfahren ein Kurzschließen mittels eines Kurzschlussschalters (24.i) des Akku-Anschlusses (12.1), an den ein Akkumulator (20) angeschlossen ist, umfasst, **dadurch gekennzeichnet, dass**
(e) das Dekontaktieren eines Akkumulators (20.1), dessen Akku-Spannung (U_{20.1}) die vorgegebene Minimal-Spannung (Uₘᵢₙ) unterschreitet, sodass er nicht mehr in Reihe geschaltet ist, ein Schließen eines ersten Schaltelements (36a.i) des Kurzschlussschalters (24.i) umfasst,
und dass das Verfahren den Schritt
(f) Schließen oder Geschlossen-Halten eines zweiten Schaltelements (36b.i) des Kurzschlussschalters (24.i) des Akku-Anschlusses (12.i),
wobei das zweite Schaltelement (36b.i) so verschaltet ist, dass unabhängig vom Schaltzustand des ersten Schaltelements (36a.i) der am entsprechenden Akku-Anschluss angeschlossene Akkumulator nur dann entladen werden kann, wenn das zweite Schaltelement (36b.i) geschlossen ist, aufweist.

13. Verfahren nach Anspruch 12, **gekennzeichnet durch** den Schritt:
(a) Erfassen, dass kein Akkumulator (20.i) am Akku-Anschluss (12.i) angeschlossen ist,
(b) Öffnen oder Geöffnet-Halten des zweiten Schaltelements (36b.i), danach
(c) Öffnen oder Geöffnet-Halten des ersten Schaltelements (36a.i) und danach
(d) Schließen des zweiten Schaltelements (36b.i).

14. Verfahren nach Anspruch 12 oder 13, **gekennzeichnet durch** die Schritte:
(i) Erfassen eines polfalsch angeschlossenen Akkumulators (20) und Ausgeben einer Verpolungs-Warnmeldung und/oder
(ii) polrichtiges Anschließen des polfalsch angeschlossenen Akkumulators (20).

## Claims

1. A rechargeable battery discharge device (10) for discharging rechargeable batteries (20) within the scope of a recycling process with
(a) a first rechargeable battery connection (12.1) for connecting a first rechargeable battery (20.1),
(b) a second rechargeable battery connection (12.2) for connecting a second rechargeable battery (20.2),
(c) at least a third rechargeable battery connection (12.3) for connecting a third rechargeable battery (20.3) and
(d) a load connection (14) for a load (16) for dissipating an electric output during discharging of the rechargeable batteries (20),
(e) a discharge circuit (18) comprising
(i) a first voltmeter (22.1) that is arranged to measure a first rechargeable battery voltage (U_{20.1}) dropped across the first rechargeable battery connection (12.1),
(ii) a second voltmeter (22.2) that is arranged to measure a second rechargeable battery voltage (U _{2o.2}) dropped across the second rechargeable battery connection (12.2),
(iii) a third voltmeter (22.3) that is arranged to measure a third rechargeable battery voltage (U_{20.3}) dropped across the third rechargeable battery connection (12.3), and
(iv) a control unit (27),
(f) the control unit (27) being designed to automatically carry out a method comprising the steps:
(i) for all voltmeters (22.i), detecting the respective rechargeable battery voltage (U_{20.i}),
(ii) when the respective rechargeable battery voltage (U_{20.i}) exceeds a predetermined minimum voltage (Uₘᵢₙ), connecting the corresponding rechargeable battery (20.i) into a series circuit with at least one other rechargeable battery or maintaining such a connection, and
(iii) when the respective rechargeable battery voltage (U_{20.i}) does not exceed a minimum voltage (Uₘᵢₙ), removing the corresponding rechargeable battery (20.i) from the series circuit,
(g) wherein the minimum voltage (Uₘᵢₙ) is selected in such a way that a runaway of the rechargeable battery is prevented, and
(h) the discharge circuit (18) comprises
(i) a first short circuit switch (24.1) for short-circuiting the first rechargeable battery connection (12.1),
(ii) a second short circuit switch (24.2) for short-circuiting the second rechargeable battery connection (12.2) and
(iii) a third short circuit switch (24.3) for short-circuiting the third rechargeable battery connection (12.3), and
(iv) is configured to remove the corresponding rechargeable battery (20.i) from the series circuit by means of the corresponding short circuit switch (24.1, 24.2, 24.3),
(i) wherein the short circuit switches (24.1, 24.2, 24.3) each comprise a first switch element (36a.1, 36a.2, 36a.3),
**characterised in that**
(j) the short circuit switches (24.1, 24.2, 24.3) each have a second switch element (36b.1, 36b.2, 36b.3), which are connected in such a way that the following applies for each second switch element: irrespective of the switching state of the first switch element, the rechargeable battery connected to the corresponding rechargeable battery connection can only be discharged when the second switch element is closed.

2. The rechargeable battery discharge device (10) according to claim 1, **characterised by**
a load (16) connected to the load connection (14) in the form of an inverter (17) for generating an AC voltage (U_{AC}) of a predetermined frequency (f) and voltage.

3. The rechargeable battery discharge device (10) according to one of the preceding claims, **characterised in that** the load is a DC voltage converter for generating a DC voltage of a predetermined voltage from the DC voltage acting on the load connection (14).

4. The rechargeable battery discharge device (10) according to one of the preceding claims, **characterised by**
a display (28) for displaying the rechargeable batteries (20.i) whose respective rechargeable battery voltage (U_{20.i}) falls below the minimum voltage (Uₘᵢₙ) and/or the rechargeable battery connections (14.i) whose connection contacts (26) are short-circuited.

5. The rechargeable battery discharge device (10) according to one of the preceding claims, **characterised by** a polarity reversal protection circuit (30) for automatically
(i) detecting a rechargeable battery (20) connected with the incorrect polarity and emitting a polarity reversal warning and/or
(ii) connecting the incorrectly connected rechargeable battery (20) with the right polarity.

6. The rechargeable battery discharge device (10) according to one of the preceding claims, **characterised in that** the control unit (27) is configured to automatically carry out a method comprising the steps:
(i) determining changes in rechargeable battery voltages (U₂₀) over time and
(ii) bridging the corresponding rechargeable battery (20) by means of the corresponding short circuit switch (24) and/or emitting a voltage disconnection warning when the change in rechargeable battery voltage over time (U) lies outside of a predetermined tolerance interval.

7. The rechargeable battery discharge device (10) according to one of the preceding claims, **characterised in that** the control unit (27) is configured to automatically carry out a method comprising the step:
connecting some of the rechargeable batteries (20.i) into the series circuit, so that a sum of the rechargeable battery voltages (U_{20.i}) lies within a predetermined target voltage interval (Z), wherein the combination with the largest number of rechargeable battery voltages (U_{20.i}) is selected when two or more combinations of rechargeable battery voltages (U_{20.i}) lie within the target voltage interval (Z).

8. The rechargeable battery discharge device (10) according to one of the preceding claims, **characterised by**
at least one heat sensor (34) that is arranged to detect a temperature (Ti) of at least one of the rechargeable batteries (20.i).

9. The rechargeable battery discharge device (10) according to one of the preceding claims, **characterised in that** the control unit (27) is configured to automatically carry out a method comprising the steps:
(a) detecting a rechargeable battery (20.i) that is connected to a rechargeable battery connection (12.i) and does not exceed the minimum voltage (Uₘᵢₙ),
(b) closing a first switch element (36a. i) of the short circuit switch (24.i) of the rechargeable battery connection (12.i), or keeping said element closed,
(c) closing a second switch element (36b.i) of the short circuit switch (24.i) of the rechargeable battery connection (12.i), or keeping said element closed,
(d) emitting a signal that encodes that the rechargeable battery can be removed,
(e) detecting that no rechargeable battery (20.i) is connected to the rechargeable battery connection (12.i),
(f) opening the second switch element (36b.i) or keeping it open, then
(g) opening the first switch element (36a.i) or keeping it open, and then
(h) closing the second switch element (36b.i).

10. The rechargeable battery discharge device according to one of the preceding claims 2 or 4 to 9, **characterised in that**
(a) the inverter (17) is connected to a power grid (38, 38') to which electrical consumers (40.j) are connected,
(b) the control unit (27) is designed to automatically carry out a method comprising the steps:
(i) detecting a target power output (Pₛₒₗₗ) of the rechargeable battery discharge device (10) and
(ii) reducing a discharge output of the rechargeable batteries (20) when an actual power output (Pist) exceeds the target power output (Pₛₒₗₗ).

11. The rechargeable battery discharge device according to one of the preceding claims, **characterised by**
(a) an electrical buffer store (42),
(b) the control unit (27) being designed to automatically carry out a method comprising the steps:
(i) detecting the target power output (Pₛₒₗₗ) of the rechargeable battery discharge device (10) and
(ii) loading the buffer store (42) so that the actual power output(Pᵢₛₜ) does not exceed the target power output (Pₛₒₗₗ).

12. A method for discharging a plurality of rechargeable batteries (20) by means of a rechargeable battery discharge device (10) comprising the automatically performed steps:
(a) continuously measuring a rechargeable battery voltage (U₂₀) of a plurality of rechargeable batteries (20.i), each of which is connected to a rechargeable battery connection (12.i) of the rechargeable battery discharge device (10),
(b) connecting the rechargeable batteries whose rechargeable battery voltages (U₂₀) do not fall below a predetermined minimum voltage (Uₘᵢₙ) into a series circuit, so that the rechargeable batteries (20.i) are discharged, and
(c) decontacting a rechargeable battery (20.1) whose rechargeable battery voltage (U_{20.1}) falls below the predetermined minimum voltage (Uₘᵢₙ), so that it is no longer connected in series,
(d) wherein the minimum voltage (Uₘᵢₙ) is 0 volt and/or the method comprises a short-circuiting by means of a short circuit switch switch (24.i) of the rechargeable battery connection (12.1) to which a rechargeable battery (20) is connected,
**characterised in that**
(e) decontacting a rechargeable battery (20.1) whose rechargeable battery voltage (U_{20.1}) falls below the predetermined minimum voltage (Uₘᵢₙ), so that it is no longer connected in series, involves closing a first switch element (36a.i) of the short circuit switch (24.i),
and the method comprises the step
(f) closing a second switch element (36b.i) of the short circuit switch (24.i) of the rechargeable battery connection (12.i), or keeping said element closed,
wherein the second switch element (36b.i) is connected in such a way that, irrespective of the switching state of the first switch element (36a.i), the rechargeable battery connected to the corresponding rechargeable battery connection can only be discharged when the second switch element (36b.i) is closed.

13. The method according to claim 12, **characterised by** the step:
(a) detecting that no rechargeable battery (20.i) is connected to the rechargeable battery connection (12.i),
(b) opening the second switch element (36b.i) or keeping it open, then
(c) opening the first switch element (36a.i) or keeping it open, and then
(d) closing the second switch element (36b.i).

14. The method according to claim 12 or 13, **characterised by** the steps:
(i) detecting a rechargeable battery (20) connected with the incorrect polarity and emitting a polarity reversal warning and/or
(ii) connecting the incorrectly connected rechargeable battery (20) with the right polarity.

## Revendications

1. Dispositif (10) de décharge d'accumulateurs pour décharger des accumulateurs (20) dans le cadre d'un procédé d'élimination, comprenant
(a) une première borne de connexion d'accumulateur (12.1) pour connecter un premier accumulateur (20.1),
(b) une deuxième borne de connexion d'accumulateur (12.2) pour connecter un deuxième accumulateur (20.2),
(c) au moins une troisième borne de connexion d'accumulateur (12.3) pour connecter un troisième accumulateur (20.3), et
(d) une borne connexion de charge (14) pour une charge (16) destinée à évacuer une puissance électrique lors de la décharge des accumulateurs (20),
(e) un circuit de décharge (18) qui comprend
(i) un premier voltmètre (22.1) agencé pour mesurer une première tension d'accumulateur (U_{20.1}) qui chute à la première borne de connexion d'accumulateur (12.1),
(ii) un deuxième voltmètre (22.2) agencé pour mesurer une deuxième tension d'accumulateur (U_{20.2}) qui chute à la deuxième borne de connexion d'accumulateur (12.2),
(iii) un troisième voltmètre (22.3) agencé pour mesurer une troisième tension d'accumulateur (U_{20.3}) qui chute à la troisième borne de connexion d'accumulateur (12.3), et
(iv) une unité de commande (27),
(f) l'unité de commande (27) étant conçue pour mettre en oeuvre automatiquement un procédé comprenant les étapes consistant à :
(i) pour tous les voltmètres (22.i), détecter la tension d'accumulateur respective (U_{20.i}),
(ii) si la tension d'accumulateur respective (U_{20.i}) dépasse une tension minimale prédéfinie (Uₘᵢₙ), commuter ou maintenir commuté l'accumulateur correspondant (20.i) dans un circuit en série avec au moins un autre accumulateur, et
(iii) si la tension d'accumulateur respective (U_{20.i}) ne dépasse pas la tension minimale (Uₘᵢₙ), retirer l'accumulateur correspondant (20.i) du circuit en série,
(g) la tension minimale (Uₘᵢₙ) étant choisie de manière à éviter un emballement de l'accumulateur, et
(h) le circuit de décharge (18) comprenant
(i) un premier court-circuiteur (24.1) pour court-circuiter la première borne de connexion d'accumulateur (12.1),
(i) (ii) un deuxième court-circuiteur (24.2) pour court-circuiter la deuxième borne de connexion d'accumulateur (12.2), et
(ii) un troisième court-circuiteur (24.3) pour court-circuiter la troisième borne de connexion d'accumulateur (12.3), et
(iii) étant conçu pour retirer l'accumulateur correspondant (20.i) du circuit en série au moyen du court-circuiteur correspondant (24.1, 24.2, 24.3),
(i) les court-circuiteurs (24.1, 24.2, 24.3) comprenant chacun un premier élément de commutation (36a.1, 36a.2, 36a.3),
**caractérisé en ce que**
(j) les court-circuiteurs (24.1, 24.2, 24.3) comprennent chacun un deuxième élément de commutation (36b.1, 36b.2, 36b.3) qui sont connectés entre eux de telle sorte que, pour chaque deuxième élément de commutation, indépendamment de l'état de commutation du premier élément de commutation, l'accumulateur connecté à la borne de connexion d'accumulateur correspondante ne peut être déchargé que si le deuxième élément de commutation est fermé.

2. Dispositif de décharge d'accumulateur (10) selon la revendication 1, **caractérisé par** une charge (16), connectée à la borne de charge (14), sous la forme d'un onduleur (17) pour générer une tension alternative (U_{AC}) d'une fréquence (f) et d'une tension prédéfinies.

3. Dispositif de décharge d'accumulateur (10) selon l'une des revendications précédentes, **caractérisé en ce que** la charge est un convertisseur continu-continu pour générer une tension continue d'une tension prédéfinie à partir d'une tension continue appliquée à la borne de charge (14).

4. Dispositif de décharge d'accumulateur (10) selon l'une des revendications précédentes, **caractérisé par** un indicateur (28) pour indiquer les accumulateurs (20.i) dont la tension d'accumulateur respective (U_{20.i}) est inférieure à la tension minimale (Uₘᵢₙ), et/ou pour indiquer les bornes de connexion d'accumulateur (14.i) dont les contacts de borne (26) sont court-circuités.

5. Dispositif de décharge d'accumulateur (10) selon l'une des revendications précédentes, **caractérisé par** un circuit de protection contre l'inversion de polarité (30) pour automatiquement
(i) détecter un accumulateur (20) dont la polarité est incorrecte, et émettre un message d'avertissement d'inversion de polarité, et/ou
(ii) connecter à la polarité correcte l'accumulateur (20) dont la polarité est incorrecte.

6. Dispositif de décharge d'accumulateur (10) selon l'une des revendications précédentes, **caractérisé en ce que** l'unité de commande (27) est conçue pour mettre en oeuvre automatiquement un procédé comprenant les étapes consistant à :
(i) déterminer les variations temporelles des tensions d'accumulateur (U₂₀), et
(ii) ponter l'accumulateur correspondant (20) au moyen du court-circuiteur correspondant (24), et/ou émettre un message d'avertissement de rupture de tension si la variation temporelle de la tension d'accumulateur (Ů) se situe en dehors d'un intervalle de tolérance prédéfini.

7. Dispositif de décharge d'accumulateur (10) selon l'une des revendications précédentes, **caractérisé en ce que** l'unité de commande (27) est conçue pour mettre en oeuvre automatiquement un procédé comprenant l'étape consistant à :
brancher une partie des accumulateurs (20.i) dans le circuit en série de sorte qu'une somme des tensions d'accumulateur (U_{20.i}) se situe à l'intérieur d'un intervalle de tension cible prédéfini (Z), et, si deux ou plusieurs combinaisons de tensions d'accumulateur (U_{20.i}) se situent à l'intérieur de l'intervalle de tension cible (Z), sélectionner la combinaison avec le plus grand nombre de tensions d'accumulateur (U_{20.i}).

8. Dispositif de décharge d'accumulateur (10) selon l'une des revendications précédentes, **caractérisé par** au moins un capteur thermique (34) agencé pour détecter une température (Ti) de l'un au moins des accumulateurs (20.i).

9. Dispositif de décharge d'accumulateur (10) selon l'une des revendications précédentes, **caractérisé en ce que** l'unité de commande (27) est conçue pour mettre en oeuvre automatiquement un procédé comprenant les étapes consistant à :
(a) détecter un accumulateur (20.i) qui est connecté à une borne de connexion d'accumulateur (12.i) et qui ne dépasse pas la tension minimale (Uₘᵢₙ),
(b) fermer ou maintenir fermé un premier élément de commutation (36a.i) du court-circuiteur (24.i) de la borne de connexion d'accumulateur (12.i),
(c) fermer ou maintenir fermé un deuxième élément de commutation (36b.i) du court-circuiteur (24.i) de la borne de connexion d'accumulateur (12.i),
(d) émettre un signal codant que l'accumulateur peut être retiré,
(e) détecter qu'aucun accumulateur (20.i) n'est connecté à la borne de connexion d'accumulateur (12.i),
(f) ouvrir ou maintenir ouvert le deuxième élément de commutation (36b.i), puis
(g) ouvrir ou maintenir ouvert le premier élément de commutation (36a.i), puis
(h) fermer le deuxième élément de commutation (36b.i).

10. Dispositif de décharge d'accumulateur selon l'une des revendications précédentes 2 ou 4 à 9, **caractérisé en ce que**
(a) l'onduleur (17) est relié à un réseau électrique (38, 38') auquel sont connectés des consommateurs électriques (40.j),
(b) l'unité de commande (27) est conçue pour mettre en oeuvre automatiquement un procédé comprenant les étapes consistant à :
(i) détecter une puissance de sortie de consigne (P_{consigne}) du dispositif de décharge d'accumulateur (10) et
(ii) réduire une puissance de décharge des accumulateurs (20) si une puissance de sortie réelle (P_{réelle}) dépasse la puissance de sortie de consigne (Pconsigne).

11. Dispositif de décharge d'accumulateurs selon l'une des revendications précédentes, **caractérisé par**
(a) un réservoir d'accumulation électrique (42),
(b) l'unité de commande (27) étant conçue pour mettre en oeuvre automatiquement un procédé comprenant les étapes consistant à :
(i) détecter la puissance de sortie de consigne (P_{consigne}) du dispositif de décharge d'accumulateur (10) et
(ii) charger le réservoir d'accumulation (42) de sorte que la puissance de sortie réelle (P_{réelle}) ne dépasse pas la puissance de sortie de consigne (P_{consigne}).

12. Procédé pour décharger une pluralité d'accumulateurs (20) au moyen d'un dispositif de décharge d'accumulateurs (10), comprenant les étapes exécutées automatiquement, consistant à :
(a) mesurer en continu une tension d'accumulateur (U₂₀) respective d'une pluralité d'accumulateurs (20.i) connectés chacun à une borne de connexion d'accumulateur (12.i) du dispositif de décharge d'accumulateurs (10),
(b) brancher les accumulateurs (20), dont les tensions d'accumulateur (U₂₀) ne sont pas inférieures à une tension minimale prédéfinie (Uₘᵢₙ), dans un circuit en série, de sorte que les accumulateurs (20.i) sont déchargés, et
(c) décontacter un accumulateur (20.1) dont la tension d'accumulateur (U_{20.1}) est inférieure à la tension minimale prédéfinie (Uₘᵢₙ), de sorte qu'il n'est plus branché en série,
(d) la tension minimale (Uₘᵢₙ) étant de 0 volt, et/ou le procédé consistant à court-circuiter la borne de connexion d'accumulateur (12.1), à laquelle est connecté un accumulateur (20), au moyen d'un court-circuiteur (24.i),
**caractérisé en ce que**
(e) le fait de décontacter un accumulateur (20.1) dont la tension d'accumulateur (U_{20.1}) est inférieure à la tension minimale prédéfinie (Uₘᵢₙ), de sorte qu'il n'est plus branché en série, consiste à fermer un premier élément de commutation (36a.i) du court-circuiteur (24.i),
et **en ce que** le procédé comprend l'étape consistant à :
(f) fermer ou maintenir fermé un deuxième élément de commutation (36b.i) du court-circuiteur (24.i) de la borne de connexion d'accumulateur (12.i),
le deuxième élément de commutation (26b.i) étant connecté de telle sorte que, indépendamment de l'état de commutation du premier élément de commutation (36a.i), l'accumulateur connecté à la borne de connexion d'accumulateur correspondante ne peut être déchargé que si le deuxième élément de commutation (36b.i) est fermé.

13. Procédé selon la revendication 12, **caractérisé par** l'étape consistant à :
(a) détecter qu'aucun accumulateur (20.i) n'est connecté à la borne de connexion d'accumulateur (12.i),
(b) ouvrir ou maintenir ouvert le deuxième élément de commutation (36b.i), puis
(c) ouvrir ou maintenir ouvert le premier élément de commutation (36a.i), puis
(d) fermer le deuxième élément de commutation (36b.i).

14. Procédé selon la revendication 12 ou 13, **caractérisé par** les étapes consistant à :
(i) détecter un accumulateur (20) dont la polarité est incorrecte, et émettre un message d'avertissement d'inversion de polarité, et/ou
(ii) connecter à la polarité correcte l'accumulateur (20) dont la polarité est incorrecte.
